Europäisches Patentamt

European Patent Office

Office européen des brevets

(11) Publication number: **0 595 192 A1**

(12) **EUROPEAN PATENT APPLICATION**

(21) Application number: **93117032.8**

(22) Date of filing: **21.10.93**

(51) Int. Cl.5: **H04N 7/167**

(30) Priority: **30.10.92 FI 924942**

(43) Date of publication of application:
**04.05.94 Bulletin 94/18**

(84) Designated Contracting States:
**DE FR GB IT**

(71) Applicant: **NOKIA TECHNOLOGY GmbH**
**Östliche Karl-Friedrich-Strasse 132**
**D-75175 Pforzheim(DE)**

(72) Inventor: **Heikkinen, Ari**
**Metsäkedonkatu 22 AS 6**
**SF-24260 Salo(FI)**
Inventor: **Kangas, Mauri**
**Sporentie 21**
**SF-21530 Paimio(FI)**
Inventor: **Raussi, Juha**
**Ajokatu 2**
**SF-24280 Salo(FI)**
Inventor: **Hiltunen, Reino**
**Tukkitie 2 A**
**SF-28280 Salo(FI)**

(54) **Video picture encryption system.**

(57) The present invention relates to a video picture encryption system, in which lines of the video picture are shuffled before transmission, so that the lines in a predetermined section of the field or picture are shuffled while the rest of the field or picture is left unchanged, and the lines in the shuffled section are rearranged according to an algorithm in a decoder at signal reception. The line order of the shuffled video signal is known by the decoder, the encrypted section of the picture or of the field is stored in the decoder in at least one line memory (M1'), and the lines are obtained from the memory (M1') in correct order in accordance with a line order algorithm.

Rank Xerox (UK) Business Services
(3.10/3.09/3.3.4)

The present invention relates to a video picture encryption method, in which lines of the video picture are shuffled in an encoder before transmission and rearranged in a decoder at signal reception.

Pay-TV or satellite applications use as one encryption method an encryption method, which shuffles the order of the video lines (Line Shuffling). In most cases, and with moving pictures practically always it is possible with this encryption method to provide a result where it is almost impossible to outline the real picture from the encrypted picture. This encryption method, with present techniques, further provides the best possible result regarding interference and distortions caused by errors in analog transmission paths. Technically this encryption system can be realized at modest costs, but it is tried to keep as low as possible the costs of the encryption method which shuffles the order of the video lines, because this encryption method is used i.a. in pay-TV applications, in which the receiver is a so called mass-produced article. One cost increasing factor is the price of the memories, but its share of the total equipment costs can be reduced by using a smaller memory, or an alternative way is to use the same memory circuit for both read and write operations, whereby all memory locations of the memory circuit/circuits are continuously used, in other words, while information is read out from a memory location, new information is immediately written replacing the old information. There are several different possibilities to solve this problem, depending on the requirements which are placed on the transmitter and receiver structure, and on the method used to shuffle the line order. These requirements partly depend on each other.

In the encryption methods based on line shuffling the whole picture area is usually shuffled in smaller blocks, whereby the block to be shuffled slides over the whole picture area. The picture is shuffled in blocks, because the shuffling requires a memory in which the lines are stored during the processing, and because the high number of lines would require a very large and expensive memory in order to shuffle the whole picture area at the same time. Thus the size of the block used for the shuffling is small compared to the whole picture, e.g. a memory of 32 lines while the television picture comprises 625 lines (the fields contain 313 and 312 lines) . One method to shuffle the picture is also to use a so called dynamic block size. Then the picture is shuffled so that a certain number of lines are shuffled, and these lines are taken from different parts of the picture, and some of the lines can be consecutive (in the field or picture) . Due to the expensive memories, only e.g. 32 lines were shuffled, which causes the picture to look well encrypted, but the obtained shuffling result is more limited.

The patent application WO 91/13517 presents the use of a dynamic block size in an example, in which the decoder uses a certain algorithm to generate the line memory addresses (address algorithm), whereby the encoder must shuffle the lines into such an order, from which they can be returned into the original order by the decoder using the address algorithm. Thus it is not possible to shuffle the lines in an arbitrary order without losing the advantages provided by a simple decoder structure. A straightforward address algorithm used by the decoder requires that the lines are shuffled in a certain way in the encoder, so that the decoder is able to restore them. The decoder will not know the order of the lines, but it operates directly on the basis of its address algorithm. When the transmitting end arranges the lines into such an order that the device at the receiving end directly controls the memory addresses according to the address algorithm, then a fairly simple receiver structure is obtained, and the required amount of memory in the receiver can be reduced to one half (or one memory) of the prior embodiment with two memories. It was possible to reduce the amount of memory because both the read and write operations use a common memory. The disadvantage of this system is that it is cumbersome to obtain the desired line order, i.e. the advantages of the method providing a simple structure of the decoder are lost, if an arbitrary line order is desired.

The object of the present invention is to present a video picture encryption method, with which the video picture encryption can be realized in a simple way, the unauthorized decryption of which is almost impossible. In the method according to the invention the encryption is preferably realized using in the decryption only one memory, which not necessarily has to be a fast memory, and it is sufficient to store in it a section of the whole television picture or field. In the most preferred embodiment of the invention a picture or a field can be shuffled in any way, and the shuffling is excellently controlled. In the method according to the invention the video signal to be encrypted is digitized line by line and transmitted to the receiver in the shuffled line order. The order of the lines is known by the receiver or the decoder, which restores the original order of the lines. The system requires a high speed, and because of cost reasons it must function so that while elements of a previous line are read from a memory location, new elements must be written in that location from the incoming line. The invention provides a new solution, which is able to control the memory addresses. According to the invention the lines can be shuffled in any order. In a more advantageous embodiment of the invention it is essential that the same method is used for the shuffling in the encoder and for the rearrangement of the lines in the decoder. Thus, when an electronic circuit, e.g. an ASIC circuit is manufactured to realize the shuffling algorithm, the same circuit can be used in the encoder to shuffle the picture and in the decoder to rearrange the picture.

The present invention is characterized in that the line order of the shuffled video signal is known by the decoder, that the encrypted section of the picture or of the field is stored in the decoder in at least one line memory, and that the lines are obtained from the memory in the correct order in accordance with the line order algorithm.

The second embodiment of the invention is characterized in that the processing order of the memory addresses is known by the decoder, that in the decoder the whole encrypted section of the picture or of the field is written at a time at least in one line memory, and that the lines are obtained from the memory in correct order in accordance with an address algorithm.

In the most preferred embodiment of the system according to the invention the algorithm generating the line order is thus known by both the transmitter and the receiver, and the system uses separate line number memories for the address control of the line memories. The system according to the invention has an advantage in that the transmitted line order can be freely selected within some regularity: the size of the block containing the lines to be shuffled is fixed, and the algorithm generates all line numbers within that block once and only once. In such a system the structure of the transmitter and the receiver can be made similar regarding the encryption, and an economical solution is obtained also on the transmitter side.

In the video signal encryption system according to the invention, which is based on line shuffling, the whole picture is not necessarily shuffled, but the picture can contain blocks comprising a certain number of lines which are not shuffled, and further it contains at least one block, within which the lines are mutually shuffled. This fixed shuffling block can comprise several smaller blocks, if required by the memory size, each smaller block comprising a certain number of lines which are mutually shuffled according to the invention; or it can be one large block within which the lines are shuffled, if a high density line memory is available.

Below the invention is described in detail, and different embodiments of the system according to the invention are presented.

The simplest alternative embodiment of the invention is to use two line memories both in the encoder and in the decoder, using however a system in which the shuffling is well controlled according to the invention, or the lines can be shuffled in the encoder into any order and the decoder knows the order of the lines, whereby it can easily rearrange them. This is simply realized with two line memories, whereby the information to be displayed is written into memory and read from memory using two parallel memories, whereby the writing into the memory during a picture block is made in one memory, and at the same time information is read from a second memory. Both the encoder and the decoder can use different memory circuits for the read and write operations. The function of the encoder according to this solution is described below.

The lines in the field section to be shuffled are stored for the shuffling into two memories, preferably line memories, which by way of example are called memories M1 and M2. The fields to be shuffled are delayed in the encoder by two field periods, the encoder function being as follows. During the field period n the first field section n to be shuffled is written in the first memory M1. At the same time (during the same field period), from the second memory M2 is read a field section n-1 to be shuffled, which was stored during the field period n-1, i.e. the field section stored in the memory one field period earlier is read from the memory M2 at the same time. The field sections to be shuffled are shuffled by reading the sequentially stored lines out from the memory in a shuffled order. Thus the memory read address for the respective line is determined by the line order shuffling algorithm, which generates numbers 0, ..., m-1, where m is the number of lines which can be stored in the memory. During the field period n + 1 the write and read operations are exchanged, whereby the field section of the field n + 1 to be shuffled is written in the second memory M2, and at the same time from the first memory M1 we read out the field section to be shuffled, which was stored in it during the field period n. During the field period n + 2 the write and read operations are exchanged, whereby the field section of the field n + 2 to be shuffled is written in the first memory M1, and at the same time from the second memory M2 we read out the field section to be shuffled, which was stored in it during the field period n + 1. Then the write and read operations of the memories M1, M2 are again exchanged, and so the operation continues. In other words, the lines in the field section to be shuffled are delayed by proceeding so, that while the field section to be shuffled and belonging to the received video signal field is written into the second memory, we read out from the first memory the lines of the field section to be shuffled, which were stored in this memory one field period earlier, and for the transmission they are read out from the memory in a shuffled order.

The decoder function corresponds to that of the encoder described above, with the exception that in the writing step the write operation is made to the memory location required by the algorithm, and that in the reading step the lines are read out in a sequential order. The part of the picture which is not shuffled will pass the decoder without any storing in memory, enabling memory capacity savings in the decoder. The decoder also utilizes two line memories, which here by way of example are called memories M1' and M2'. The signals of the shuffled field section supplied to the decoder are correspondingly delayed in the decoder by one field period, whereby during the previous field period, e.g. the field period n, the input signal or the lines of the shuffled field section are written into the first memory M1', and from the second memory M2' the lines of the shuffled field section stored in it during the previous field period are read out. Thus when we consider this situation during the first field period we naturally do not obtain any output signal (because yet there were no lines in the memory M2'). The lines of the shuffled field section received during the field period n + 1 are written in the second memory M2', and at the same time the lines of the shuffled field section stored in the memory M1' during the field period n are read out from it. Then the lines are read from the memory M1' in a consecutive number order, whereby the output of the memory M1' provides the lines in the correct original unshuffled order. Correspondingly the memory M1' is written during the field period n + 2, and at the same time the lines of the shuffled field section stored in the second memory M2' during the field period n + 1 are read out in the decrypted order. The direction of the write and read operations of the memories M1', M2' is exchanged in the same way as in the encoder at intervals of one field period. However, the disadvantage of the solution with two memories is that the memories are expensive, although the system as such is easy to realize.

Another alternative to realize the shuffling is to use very fast memories, whereby there is time to read the video signal from the memory and simultaneously to write into the same memory, and thus only one memory is required instead of two parallel memories. The cost is however also a disadvantage when a fast memory is used, because the price of a fast memory is manifold compared to a slow memory. Let us consider a system utilizing one memory circuit for the simultaneous read and write operations. If the video picture is digitized by 8-bit A/D converters the memory organization will be N x 8 bits, or correspondingly it is possible to use two circuits with the organization N x 4 bits, or eight circuits with the organization N x 1 bit, where N is the number of the encrypted picture area's picture elements to be stored. Because a new picture element is stored in the respective memory location immediately after reading a picture element, this creates a problem in the system shuffling the video picture, because the shuffling algorithm in the encoder requires that the lines are provided in a shuffled order, and correspondingly in the decoder the lines must be returned to their original places. Two ways are presented below to realize the method according to the invention using only one memory in the decoder, the first of these being at the same time the most preferred embodiment of the invention.

The most preferred embodiment of the video picture encryption system presented below shows a method, in which the lines are arranged in an order according to a predetermined algorithm, and which is not restricted or changed by the structural characteristics of the encoder or decoder. The lines leaving the encoder are arranged in the order determined by the algorithm, whereby the decoder decrypts the shuffling with the same algorithm. All shuffling blocks can use any shuffling order, as long as information about the order used is available to both the encoder and the decoder. The method/system utilizes a fixed shuffling block, which can comprise several smaller blocks, if required by the memory size; or it can be one large block, if a high density line memory is available. Based on the present density/price development of memories we can use a block of 256 lines, when the picture is digitized so that the line section to be stored is digitized as maximum 1024 picture elements. When smaller sub-blocks are used we can use correspondingly smaller memories, e.g. 128 or 32 kilobytes.

According to the most preferred embodiment of the invention the lines output from the encoder are arranged in an order determined by an algorithm, the decoder using this same algorithm for the decryption. Two extra memories are required both in the encoder and in the decoder to control the memory addresses during the shuffling in order to put the lines in the lines containing memory M1 in an order according to the algorithm. By way of example we consider a simplified situation, in which the block size is fixed as four lines. In reality the block size is much larger, even 255 or 256 lines. The situation according to the example is presented in the table 1 below. The extra memories, preferably address memories, are provided with designations L1 and L2, and in fact no lines are stored in them, but only the line addresses, which for each block can change in accordance with the algorithm. The numbers within parenthesis represent the initial situation, or the previous contents of the memories L1, L2 and M1, or the situation before shuffling the first block.

Let us first consider the encoder, in which the process is as follows:

**Table 1:**

| | Input algorithm signal | L1 | L2 | M1 | Output signal |
|---|---|---|---|---|---|
| | (1234) | (1234) | (1234) | | |
| 1. | 12344123 | 1234 | 4123 | 2341 | 4123 |
| 2. | 12341423 | 4321 | 4123 | 4321 | 1423 |
| 3. | 12342341 | 4321 | 3241 | 4213 | 2314 |
| 4. | 12344231 | 1243 | 3241 | 1243 | 4231 |
| 5. | 12342143 | 1243 | 2134 | 2134 | 2143 |
| 6. | 12343421 | 3412 | 2134 | 3412 | 3421 |
| etc. | | | | | |

First we present some general directions how to read the table 1:
- the lines of the incoming signal are provided with a consecutive number 1, ..., 4;
- the memories L1 and L2 only contain the numbers 1...4, which are transferred between the memories;
- the memory M1 contains for each number of the extra memory L1 or L2 one whole digitized video line, which is referred to by the number 1...4, and thus a number in the table refers to a line;
- the numbers on each row represent the processing result of the corresponding block;
- the memory M1 will output lines in the same order as new lines are received.

The contents of the memories L1, L2 and M1 in table 1 for the situation preceding the period under consideration is written in parenthesis. The initial status is L1 = 1234, L2 = 1234, M1 = 1234, and the encoder function is as follows:

a. Initially the memories L1 and L2 are occupied by the numbers 1 - 4. For the first block (1.) the address lines of the memory L1 are controlled by numbers according to the algorithm, and the address lines of the memory L2 are controlled by the line number, whereby the numbers (1234) in the extra memory L1 are kept unchanged, and the number in the memory location of the extra memory L1 indicated by the algorithm is transferred to the memory locations of the extra memory L2 in sequence starting at the memory location 1.

b. For the first block (1.) the numbers are transferred from memory L1 to memory L2 according to the algorithm, and the number transferred is at the same time the address for the line memory M1. As the algorithm in this example for the first block is 4123 the contents of the memory location 4 (which according to the previous situation is the number 4) of memory L1 is transferred to the first memory location of memory L2. The contents of the memory location 1 (which according to the previous situation is the number 1) of memory L1 is transferred to the second memory location of memory L2, and the contents of the memory location 2 (which according to the previous situation is the number 2) of memory L1 is transferred to the third memory location of memory L2, and then the contents of the memory location 3 (which according to the previous situation is the number 3) of memory L1 is transferred to the fourth memory location of memory L2. Thus the extra memory L2 contains the addresses of the memory M1 (4123). While lines are written into memory M1 according to the algorithm, the lines stored there during the previous block are read out (these lines being 1234, as shown in parentheses). Because the contents of L2 is 4123, the line 1 is written into the fourth line memory area (and at the same time the previous line memory contents, or the line 4, is read out from the memory M1), the line 2 is written into the first line memory area (and at the same time the previous contents, or the line 1, is read out), the line 3 is written into the second line memory area (and at the same time the previous contents, or the line 2, is read out), and the line 4 is written into the third line memory area (and at the same time the previous contents, or the line 3, is read out), and thus the new contents of the memory M1 is 2341, and at the same time we obtained as the output signal the lines in the order 4123, or in the order according to the algorithm.

c. For the next block (2.) numbers are correspondingly transferred from the memory L2 to the memory L1 so that the address lines of memory L2 contain the numbers according to the algorithm, and that the address lines of memory L1 contain the line number, whereby the numbers (4123) in the extra memory L2 are kept unchanged, and the number in the memory location of the extra memory L2 indicated by the algorithm is transferred to the memory locations of the extra memory L1 in sequence starting at the memory location 1. Let us consider the situation of the second block (2.) according to the table. The algorithm is 1432 and the contents of the extra memory L2 is 4123 after the previous block. Thus the contents of the memory location 1 in the memory L2 (which after the previous situation is the number 4) is first transferred in accordance with the algorithm to the first memory location of memory L1. Then the contents of the memory location 4 in the memory L2 (which after the previous situation is the number 3) is transferred to the second memory location of memory L1, the contents of the memory location 3 in the memory L2 (which after the previous situation is the number 2) is transferred to the third memory location of memory L1, and the contents (which after the previous situation is the number 1) of the memory location 2 in the memory L2 is transferred to the fourth memory location of memory L1. Thus the extra memory L1 contains the addresses of the memory M1 (4321) . While lines are written into the memory M1 according to the algorithm, the lines stored there during the previous block are read out (these lines being 2341, as shown in table 1 on the row of the first block (1.)). Because the contents of L1 is 4321, then the line 1 is written into the fourth line memory area of M1 (and at the same time the previous line memory contents, or the line 1, is read out), the line 2 is written into the third line memory area (and at the same time the previous contents, or the line 4, is read out), the line 3 is written into the second line memory area (and at the same time the previous contents, or the line 3, is read out), and the line 4 is written into the first line memory area (and at the same time the previous contents, or the line 2 is read out), and thus the new contents of the memory M1 is 4321, and at the same time we obtained as an output signal the lines in the order 1432 (or in the order according to the algorithm).

d. For the next block the direction of the operation is again exchanged, and thus we proceed through the whole block to be shuffled.

In the decoder the operation almost corresponds to that of the encoder, and the processing in the decoder corresponding to the previous example is shown in table 2. In the decoder the extra memories are designated L1' and L2', and the line memory M1'.

## Table 2:

| Input signal | algorithm | L1' | L2' | M1' | Output signal |
|---|---|---|---|---|---|
| | (1234) | (1234) | (1234) | | |
| 1. 41234123 | | 1234 | 2341 | 4123 | 1234 |
| 2. 14321432 | | 2143 | 2341 | 2143 | 1234 |
| 3. 23142314 | | 2143 | 4213 | 3241 | 1234 |
| 4. 42314231 | | 3214 | 4213 | 3214 | 1234 |
| 5. 21432143 | | 3214 | 2341 | 4123 | 1234 |
| 6. 34213421 | | 1423 | 2341 | 1342 | 1234 |
| etc. | | | | | |

First we present some general directions how to read the table 2:
- the lines of the incoming signal are provided with a consecutive number 1, ..., 4;
- the memories L1' and L2' contain the numbers 1...4, which are transferred between them;
- the memory M1 contains for each number one whole digitized video line, which is referred to by the number 1...4, and thus a number in the table refers to a line;

- the numbers on each row represent the processing result of the corresponding block;
- the memory M1' will output the lines in the same order as new lines are received.

The contents of the memories L1', L2' and M1' in the picture for the situation preceding the period under consideration is written in parenthesis. The initial memory status is L1' = 1234, L2' = 1234, M1' = 1234, and the decoder function is as follows:

e. Initially the memories L1' and L2' are occupied by the numbers 1 - 4. For the first block (1.) the address lines of the memory L2' are controlled by numbers according to the algorithm, and the address lines of the memory L1' are controlled by the counter's line number, whereby the contents of the extra memory L1' is transferred in sequence to the memory locations of the extra memory L2' indicated by the algorithm.

f. For the first block (1.) the numbers are transferred from memory L1' to memory L2', the number transferred at the same time being the address for the line memory. The algorithm is the same as in the encoder, or according to this example the algorithm for the first block is 4123, whereby the number 1 from the memory L1' is transferred to the memory location 4 of the extra memory L2' (as indicated by the algorithm), then the number 2 is transferred to the memory location 1 of the extra memory L2', the number 3 is transferred to the memory location 2 and then the number 4 is transferred to the memory location 3 of the extra memory L2', whereby the contents of the extra memory L2' is 2341. The numbers in the memory L1' are addresses of the line memory areas to the line memory M1'. While lines are written into memory M1', the lines stored there during the previous block are read out (these lines being 1234, as shown in parentheses). Because the contents of L1' is 1234, the first incoming line or the line 4 is written into the first memory location of the line memory M1' (and at the same time the contents of the first line memory area, or the line 1, is read out from the memory M1'), the line 1 is written into the second line memory area (whereby a line from the line memory area 2, the line 2, is read out from the memory M1'), the line 2 is written into the third line memory area (whereby a line from the line memory area 3, or the line 3, is read out from the memory M1'), and the line 3 is written into the fourth line memory area (whereby a line from the line memory area 4, or the line 4, is read out from the memory M1'). Thus the lines 4123 are the new contents of the memory M1', in its line memory areas 1 - 4, and at the same time we obtained as an output a signal, in which the lines are in the original order, or 1234.

g. For the next block (2.) numbers are correspondingly transferred from the memory L2' to the memory L1', so that the address lines of memory L1' contain the numbers required by the algorithm, and that the address lines of memory L2' contain the line number, whereby the contents of the extra memory L2' is transferred in sequence to the memory L1', into memory locations indicated by the algorithm. In table 2 the second block (2.) has the algorithm 1432, as in table 1, and the contents of the extra memory L2' is 2341 after the previous block. Thus the number 2 is transferred to the memory location 1 of the extra memory L1' (as indicated by the algorithm), then the number 3 is transferred to the memory location 4 of the extra memory L1', the number 4 is transferred to the memory location 3, and the number 1 is transferred to the memory location 2, whereby the contents of the extra memory L1' will be 2143. The extra memory L2' contains the addresses (2341) of the line memory areas of the memory M1'. While lines are written into memory M1' according to the algorithm, the lines stored in the memory M1' during the previous block are read out (these lines being 4123, as shown in table 2 on the row of the first block (1.)). Because the contents of L2' is 2341, then the first incoming line, or the line 1, is written into the second line memory area of M1' (while the previous contents, or the line 1, is read out), the second incoming line, or the line 4, is written into the third line memory area (while the previous contents, or the line 2, is read out), the line 3 is written into the fourth line memory area (while the previous contents, or the line 3, is read out), and the line 2 is written into the first line memory area (while the previous contents, or the line 4 is read out), and thus the new contents of the memory M1' is 2143, and at the same time we obtained as the output signal the lines in the original order 1234.

h. For the next block the direction of the operation is again exchanged, and thus we proceed through the whole shuffled television transmission.

In the earlier presented system with two line memories, and in the system above with one line memory, we can use, both for the encryption in the encoder and for the line rearrangement in the decoder, either a so called fixed block size or a so called sliding block size. A fixed block size means here that in the encoder/decoder the whole section of the picture or field to be encrypted/already encrypted is written at a time into the line memory, from which it is obtained according to the invention in the encrypted/original order. A sliding block size means that only a part of the section to be encrypted/ already encrypted is written at a time into the line memory, then this section is processed, after which the next section is written into the line memory, an so on, until the whole section to be encrypted/already encrypted is processed. In the processing of subsequent sections it is possible to use lines from earlier sections.

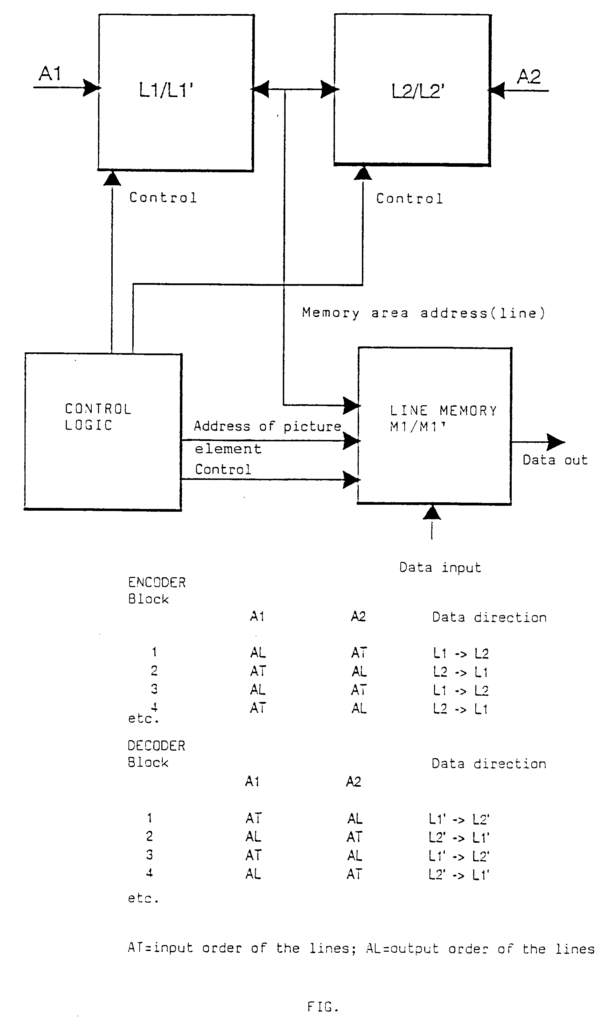

The operation both in the encoder and in the decoder can be realized by a system according to the enclosed figure. In the figure's tables AT is the address representing the input order, or in the decoder the number sequence determined by the line order algorithm and in the encoder the number of the line, and correspondingly AL is the address representing the output order, or in the decoder the number sequence determined by the line order algorithm and in the decoder the line number. The input and output orders mean as concepts the input or output orders either in the encoder or the decoder, depending which is considered. The values of A1 and A2 will be the values of AT or AL, depending on the situation. According to the example the output order AL of the lines in the encoder is block by block 4123, 1432, 2314, 4231, 2143, 3421, ..., which is correspondingly the input order AT in the decoder. The most preferred embodiment of the method according to the invention can be realized with the aid of two address number memories L1 and L2 (L1' and L2' in the decoder), one line memory M1 (M1' in the decoder), and a control logic, which controls the operation and the timing and which knows the algorithm used to shuffle and rearrange the lines. The control logic controls the encoder/decoder operation, whereby a control line is connected from it to both address number memories L1, L2 or L1', L2' and to the line memory M1 or M1'. Thus the control logic controls the memories L1, L2, M1, L1', L2', M1' to perform the line shuffling/rearrangement on each video signal, which shall encrypted/already is encrypted and which is input to the respective line memory. The address number memories supply to the line memory M1, M1' an address describing in which line memory area the line of the input video signal shall be written, and from which same line memory area of the line memory M1, M1' a line is read out. The control logic controls the addresses of the picture elements of the line memory area. The block diagram of the figure is an example of the realization of the system according to the invention. It is not described in more detail here, because essential to the system is the methods used in it, and for a person skilled in the art it is obvious how the system can be realized as a block diagram.

In a system of this kind the transmitted line order is the same as the number sequence generated by the algorithm used to control the line number memories. Because in the encoder the price is not as decisive as in the decoder, it can use a more complicated structure, e.g. separate memories for the read and write operations. However, with the above described method it is possible to arrive at a simple structure and a low price of the encoder. This is important in such applications, which have a low number of decoders in each cable-TV network. This leads to low investment costs in the transmitting end, whereby the network can be established so that the costs per decoder is kept low. The reliability of the encoder is also improved and the product development time will be shorter.

In the third embodiment of the invention the encoder knows the address algorithm used in the decoder and arranges the lines transmitted by it in such an order that the original order is restored when the decoder uses this address algorithm. By using such an algorithm the sliding block size system is easier to realize than in the above presented system. The encoder utilizes two separate memories, writing being performed to one memory while reading is performed to the other. However, in the following we discuss a system with a fixed block size, in which one way to realize the encoder could be according to the example below, which by way of example deals with a situation where the block to be encrypted contains only four lines. The situation is shown farther below in table 3. In practice the block to be encrypted will contain more lines.

As an illustration of the third embodiment of the invention a situation according to table 3 is described below, where the address algorithms are numbered with the consecutive numbers 0...8: 4123, 1432, 2314, 4231, 2143, 3421, 4132, 2413, 4312.

The block 0 is written into the memory M1 by the algorithm 2, while a signal is read out from the memory M2 by the algorithm 0. Then the line arriving first in the memory M1 (or the line 1) is written according the algorithm 2 (which is 2314) in the memory area 2 , the line arriving as second (or the line 2) is written in the memory area 3, the line arriving as third (or the line 3) is written in the memory area 1, and the line arriving as fourth (or the line 4) is written in the memory area 4, whereby according to table 3 the contents of the memory M1 will be 3124. Nothing is yet output from the memory M2 because it does not yet contain anything (xxxx).

Block 1 is written into the memory by the algorithm 3 while a signal is read out from the memory M1 by the algorithm 1. Then the line arriving first in the memory M2 (or the line 1) is written according the algorithm 3 (which 4231) in the memory area 4 , the line arriving as second (or the line 2) is written in the memory area 2, the line arriving as third (or the line 3) is written in the memory area 3, and the line arriving as fourth (or the line 4) is written in the memory area 1, whereby the contents of the memory M2 will be 4231. Correspondingly, the memory M1 is read according to the algorithm 1 (which is 1432), whereby a line is read from the memory area 1 (the line 3), then the a line is read from the memory area 4 (line 4), then a line is read from the memory area 3 (line 2), and finally a line is read from the memory area 2 (line 1), whereby the lines in the shuffled output signal are in the order 3421.

The block 2 is written into the memory M1 by the algorithm 4 while a signal is read out from the memory M2 by the algorithm 2. Then according to the algorithm 4 (which is 2143) the line arriving first (or the line 1) is written in the memory M1 into the memory area 2, the line arriving as second (or the line 2) in the memory area 1, the line arriving as third (or the line 3) in the memory area 4, and the line arriving as fourth, (or the line 4) in the memory area 3, whereby according to table 3 the contents of the memory M1 will be 2143. Correspondingly, the memory M2 is read according to the algorithm 2 (which is 2314), whereby a line is first read from the memory area 2 (the line 2), then the a line is read from the memory area 3 (line 3), then a line is read from the memory area 1 (line 4) and finally a line is read from the memory area 4 (line 1), whereby the lines in the shuffled output signal are in the order 2341.

In other words, generally expressed the block 2*m to be encrypted is written into the memory M1 using the algorithm 2*m + 2 while the encrypted signal is read out from the memory M2 by the algorithm 2*m, whereby the lines in the memory M2 were lines in the block 2*m-1, and whereby m is an integer at least equal to 1.

## Table 3

| Block no. | Input signal | Algo- rithm no. | Algo- rithm | M1 | M2 | Output signal |
|---|---|---|---|---|---|---|
| 0 | 1234 | 0 | 4123 | 3124 | xxxx | xxxx |
| 1 | 1234 | 1 | 1432 | 3124 | 4231 | 3421 |
| 2 | 1234 | 2 | 2314 | 2143 | 4231 | 2341 |
| 3 | 1234 | 3 | 4231 | 2143 | 4312 | 3142 |
| 4 | 1234 | 4 | 2143 | 2431 | 4312 | 3421 |
| 5 | 1234 | 5 | 3421 | 2431 | 3142 | 3142 |
| 6 | 1234 | 6 | 4132 | 3421 | 3142 | 2341 |
| 7 | 1234 | 7 | 2413 | - | - | - |
| 8 | 1234 | 8 | 4312 | - | - | - |

In such a system the encoder can arrange the lines in an order required by the decoder also by other means. Instead of performing reading and writing of the line memories M1, M2 by the above described method, a corresponding result can be obtained using two address number memories L1, L2, in which the corresponding operations are performed, and then the obtained result is used as the line address for the line memories M1, M2. Then the procedure is as follows.

The address algorithms are numbered with the consecutive numbers 0...8: 4123, 1432, 2314, 4231, 2143, 3421, 4132, 2413, 4312.

For the block 0 the line numbers are written in the memory L1 into the memory locations indicated by the algorithm 2, while numbers are read out from the memory L2 from memory locations indicated by the algorithm 0.

The digitized video contents of the block 0 is written in the memory M1 line by line in the number sequence, and a signal is read out from the memory M2 from the line indicated by an address read out from the memory L2.

The memory L2 is written by the algorithm 3 during block 1, while the memory L1 is read by the algorithm 1.

The digitized video contents of the block 1 is written line by line in consecutive order to the memory M2, and a signal is read from the memory M1 from the line indicated by the address read out from the memory L1.

The memory L1 is written by the algorithm 4 during block 2, while the memory L2 is read by the algorithm 2.

The digitized video contents of the block 2 is written line by line in consecutive order to the memory M1, and a signal is read from the memory M2 from the line indicated by the address read out from the memory L2.

In other words, generally expressed the block 2*m to be encrypted is written line by line in consecutive order into the memory M1, and the memory L1 is written using the algorithm 2*m + 2, while the encrypted signal is read out from the memory M2, so that the line address is obtained by reading the number contents of the memory L2 by the algorithm 2*m, whereby the lines in the memory M2 were lines of the block 2*m-1.

Correspondingly, the block 2*m + 1 to be encrypted is written line by line in consecutive order into the memory M2, and numbers are written into the memory L2 using the algorithm 2*m + 3, while the encrypted signal is read out from the memory M1, so that the line address is obtained by reading the number contents of the memory L1 by the algorithm 2*m + 1, whereby the lines in the memory M1 were lines of the block 2*m.

In the output signal the line order is thus the same as with the algorithm described above in connection with table 3. The decoder can operate, as is described later, by an encoder realized in either way. An example of the processing in the decoder is presented in table 4.

The decoder uses the address algorithm directly to generate the line memory addresses, whereby the lines should be restored in the original order. The decoder uses the same line memories memory M1' for reading and writing operations, wherefore the output signal is determined by the address algorithm.

## Table 4

| Input signal | Algorithm no. | Algorithm | M1' | Output signal |
|---|---|---|---|---|
| 3421 | 1 | 1432 | 3124 | xxxx |
| 2341 | 2 | 2314 | 4231 | 1234 |
| 3142 | 3 | 4231 | 2143 | 1234 |
| 3421 | 4 | 2143 | 4312 | 1234 |
| 3142 | 5 | 3421 | 2431 | 1234 |
| 2341 | 6 | 4132 | 3142 | 1234 |

Then the block which arrived first (3421) is written into the memory M1' according to the algorithm 1 (which is 1432), whereby the first line (or the line 3) is written into the memory area 1, the second line (or line 4) is written into the memory area 4, the third line (or line 2) is written into the memory area 3, and the fourth line (or line 1) is written into the memory area 2, whereby the contents of the memory M1' will be 3124. At the same time and in the same order a line is read out from the respective memory area, in which a line is being written. Because initially the memory has no contents, nothing is output when the first block is written into the memory M1'.

The next received block (2341) is written into the memory M1' according to the algorithm 2 (which is 2314), whereby the first line (or line 2) is written into the memory area 2, while the line it contained (or the line 1) is read out from it, the second line (or line 3) is written into the memory area 3, while the line it contained (or the line 2) is read out from it, the third line (or line 4) is written into the memory area 1, while the line it contained (or the line 3) is read out from it, and the fourth line (or line 1) is written into the memory area 4, while the line it contained (or the line 4) is read out from it, whereby the contents of the memory M1' will be 4231, and at the same time the output provided the lines 1234, or in the correct order. In this way the blocks of the encrypted pictures/fields of the whole television transmission are processed line by line, and so the decoder at the output provides the lines in the correct order.

It is true that a disadvantage of a system according to the embodiment presented above is that the line orders are shuffling results of the so called second order, whereby it is difficult to control the output line order, or it is may be inconvenient to obtain the desired line order.

The most preferred embodiment of the system according to the invention provides a simple encoder and decoder design and a well controlled picture shuffling. Further it is possible to shuffle large picture areas (256 lines), whereby the picture is shuffled very efficiently, and an unauthorized decryption of the picture is almost impossible. The present invention is not limited to the examples shown here, but it can be modified within the scope of the enclosed claims.

**Claims**

1. Video picture encryption system, in which lines of the video picture are shuffled in an encoder before transmission so that the lines in a predetermined section of the field or picture are shuffled while the rest of the field or picture is left unchanged, and the lines in the shuffled section are rearranged at reception of the signal in a decoder according to an algorithm, **characterized** in that the line order of the shuffled video signal is known by the decoder, that the encrypted section of the picture or of the field is stored in the decoder in at least one line memory (M1'), and that the lines are obtained from the memory (M1') in correct order in accordance with a line order algorithm.

2. The system of claim 1, **characterized** in that in the decoder the whole encrypted section of the field or picture is written at a time in one line memory (M1').

3. The system of claim 1, **characterized** in that in the decoder the whole encrypted section of the field or picture is arranged by reading at a time into one line memory (M1') a predetermined part of the encrypted section and by arranging then the other parts of the encrypted section in a consecutive order in a corresponding way using the same line memory (M1').

4. The system of any previous claim, **characterized** in that the lines are shuffled in the encoder and rearranged in the decoder using the same algorithm.

5. The system of claim 4, **characterized** in that the video signal to be encrypted is stored into one line memory (M1) in the encoder in order to perform the shuffling of the lines.

6. The system of claims 1 to 5, **characterized** in that in order to shuffle and rearrange the lines according to the algorithm address memories (L1, L2; L1', L2') are used to control the addresses of the line memory (M1; M1').

7. The system of claim 6, **characterized** in that it utilizes two address memories (L1, L2; L1', L2'), whereby in the encoder the shuffling of the video signal to be encrypted is performed by controlling, for the first video signal to be transmitted
   a) the address lines of the first address memory (L1) with numbers according to the algorithm, and the address lines of the second address memory (L2) with the line number, whereby the numbers in the first address memory (L1) are kept unchanged, and the number in the memory location of the first address memory (L1) indicated by the algorithm is transferred to the memory locations of the second address memory (L2) in sequence starting at the first memory location, the number transferred to the second address memory (L2) being the line memory (M1) address according to which the lines of the video signal to be encrypted are stored in the line memory (M1), and while the line is stored in the line memory (M1) the previous line of the video signal to be encrypted stored in the same memory area is read out, whereby the lines are obtained from the line memory (M1) in an order according to the algorithm, after which the control alternates so that,
   b) for every second video signal to be encrypted the address lines of the second address memory (L2) are controlled with numbers according to the algorithm, and the address lines of the first address memory (L1) are controlled with the line number, whereby the numbers in the second address memory (L2) are kept unchanged, and the number in the memory location of the second address memory (L2) indicated by the algorithm is transferred to the memory locations of the first address memory (L1) in sequence starting at the first memory location, the number transferred to the first address memory (L1) being the line memory (M1) address according to which the lines of the video signal to be encrypted are stored in the line memory (M1), and while the line is stored in the line memory (M1) the previous line of the video signal to be encrypted stored in the same memory area is read out, whereby the lines are obtained from the line memory (M1) in an order according to the algorithm, and for every second video signal to be encrypted the control is according to step a).

8. The system of claim 6, **characterized** in that it utilizes two address memories (L1, L2; L1', L2'), whereby in the decoder the rearrangement of the lines of the encrypted video signal is performed by controlling, for the first received encrypted video signal

c) the address lines of the second address memory (L2') with numbers according to the algorithm, and the address lines of the first address memory (L1') with the line number, whereby the numbers in the first address memory (L1') are kept unchanged, and the contents of the first address memory (L1') is transferred to the memory locations of the second address memory (L2') indicated by the algorithm, the number transferred to the second address memory (L2') being the line memory (M1') address according to which the lines of the encrypted video signal are stored in the line memory (M1'), and while the line is stored in the line memory (M1') a line of the previous encrypted video signal is read out from a memory area indicated by the first address memory (L1'), whereby the lines are obtained from the line memory (M1') in the original unshuffled order, after which the control alternates so that,

d) for every second encrypted video signal the address lines of the first address memory (L1') are controlled with numbers according to the algorithm, and the address lines of the second address memory (L2') are controlled with the line number, whereby the numbers in the second address memory (L2') are kept unchanged, and the contents of the second address memory (L2) is transferred in sequence to the memory locations of the first address memory (L1') indicated by the algorithm, the number transferred to the first address memory (L1') being the line memory (M1') address according to which the lines of the encrypted video signal are stored in the line memory (M1'), and while the line is stored in the line memory (M1') a previous line of the encrypted video signal is read out from a memory area indicated by the second address memory (L2'), whereby the lines are obtained from the line memory (M1') in the original unshuffled order, and for every second video signal to be encrypted the control is according to step c).

9. The system of claim 1 or 4, **characterized** in that the video signal to be encrypted is stored into two line memories (M1, M2) in the encoder in order to perform shuffling of the lines, whereby, while the video signal to be encrypted is stored in one line memory, the encrypted video signal is read out from the other, the encrypted video signal being stored into two line memories (M1', M2') in the decoder in order to rearrange the picture, whereby, while the encrypted video signal is stored in one line memory (M1' or M2'), the original unshuffled video signal is read out from the other (M1' or M2').

10. The system of claim 9, **characterized** in that the direction of the read and write operations is exchanged between the line memories (M1, M2; M1', M2') in intervals of one field or one picture.

11. Video picture encryption system, in which lines of the video picture are shuffled before transmission so that the lines in a predetermined section of the field or picture are shuffled while the rest of the field or picture is left unchanged, and the lines in the shuffled section are rearranged in the decoder at reception of the signal according to an algorithm, **characterized** in that the processing order of the memory addresses is known by the decoder, that in the decoder the whole encrypted section of the picture or of the field is written at a time in at least one line memory (M1'), and that the lines are obtained from the memory (M1') in correct order in accordance with an address algorithm.

12. The system of claim 12, **characterized** in that the lines are shuffled in the encoder by two line memories (M1, M2), whereby

- the video signal to be encrypted and having the order number (2*m) is written into the first line memory (M1) using the algorithm (2*m + 2) while the encrypted video signal is read out from the second line memory (M2) by the algorithm (2*m), whereby the lines in the second line memory (M2) were lines in the video signal having the order number (2*m-1), and whereby m is an integer at least equal to 1, and

- the video signal to be encrypted and having the order number (2*m + 1) is written into the second line memory (M2) using the algorithm (2*m + 3) while the encrypted video signal is read out from the first line memory (M1) by the algorithm (2*m + 1), whereby the lines in the first line memory (M1) were lines in the video signal having the order number (2*m).

13. The system of claim 11, **characterized** in that the lines are shuffled in the encoder by two line memories (M1, M2), and that further in the shuffling two address memories (L1, L2) are used to control the addresses of the line memories (M1, M2), whereby
    - the video signal to be encrypted and having the order number (2*m), whereby m is an integer at least equal to 1, is written into the first line memory (M1) in the order of the line number, and numbers are written in the first address memory (L1) using the algorithm (2*m + 2) and the encrypted video signal is read out from the second line memory (M2) according to the line addresses in the second address memory (L2), which are obtained by reading the number contents of the second address memory (L2) using the algorithm (2*m), whereby the lines in the second line memory (M2) were lines in the video signal having the order number (2*m-1), and
    - the video signal to be encrypted and having the order number (2*m + 1) is written line by line in the number order into the second line memory (M2) using the algorithm (2*m + 3) and the encrypted signal is read out from the first line memory (M1) according to the line address in the first address memory (L1), whereby the line addresses are obtained by rea-ding the number contents of the first address memory (L1) using the algorithm (2*m + 1), whereby the lines in the first line memory (M1) were lines in the video signal having the order number (2*m).

14. The system of any previous claim 11 to 13, **characterized** in that the lines are arranged in the decoder using one line memory (M1'), whereby the lines of the encrypted video signal are written in consecutive order in the memory areas of the line memory (M1') using the address algorithm of the respective video signal in due order, and the line present in the respective memory area of the line memory (M1') is read out, whereby the lines of the video signal at the output are obtained in the original unshuffled order.

A1 → **L1/L1'**     **L2/L2'** ← A2

Control     Control

Memory area address(line)

**CONTROL LOGIC**

Address of picture element

Control

**LINE MEMORY M1/M1'**

Data out

Data input

ENCODER
Block

|   | A1 | A2 | Data direction |
|---|----|----|----------------|
| 1 | AL | AT | L1 -> L2 |
| 2 | AT | AL | L2 -> L1 |
| 3 | AL | AT | L1 -> L2 |
| 4 | AT | AL | L2 -> L1 |
| etc. |  |  |  |

DECODER
Block

|   | A1 | A2 | Data direction |
|---|----|----|----------------|
| 1 | AT | AL | L1' -> L2' |
| 2 | AL | AT | L2' -> L1' |
| 3 | AT | AL | L1' -> L2' |
| 4 | AL | AT | L2' -> L1' |
| etc. |  |  |  |

AT=input order of the lines; AL=output order of the lines

FIG.

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y A | US-A-4 673 975 (INABA ET AL) <br> * column 4, line 28 - line 65 * <br><br> * column 6, line 31 - line 57 * <br> --- | 1,11 <br> 2-10, <br> 12-14 | H04N7/167 |
| Y A | GB-A-2 222 342 (BBC) <br> * the whole document * <br><br> --- | 1,11 <br> 2-10, <br> 12-14 | |
| A | US-A-4 405 942 (BLOCK ET AL.) <br> * the whole document * <br> ----- | 1-14 | |
| | | | TECHNICAL FIELDS SEARCHED (Int.Cl.5) <br><br> H04N |

The present search report has been drawn up for all claims

| Place of search | Date of completion of the search | Examiner |
|---|---|---|
| THE HAGUE | 17 January 1994 | GREVE, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)